# EUROPEAN PATENT SPECIFICATION

(11) **EP 1 236 613 B1**
(45) Date of publication and mention of the grant of the patent: **05.10.2005**
(21) Application number: 02003903.8
(22) Date of filing: 21.02.2002
(51) Int. Cl.: B60Q 1/12, F21V 14/04

(54) **Head lamp for vehicle**
Fahrzeugscheinwerfer
Projecteur pour véhicule

(30) Priority: 28.02.2001 JP 2001055319
(43) Date of publication of application: 04.09.2002
(73) Proprietor: ICHIKOH INDUSTRIES, LTD., Tokyo 144-0022 (JP)
(72) Inventor: Suzuki, Yasuhumi, c/o Ichikoh Industries, Ltd., Isehara-shi, Kanagawa-ken 259-1192 (JP); Furuya, Takayuki, c/o Ichikoh Industries, Ltd., Isehara-shi, Kanagawa-ken 259-1192 (JP); Okubo, Yasuhiro, c/o Ichikoh Industries, Ltd., Isehara-shi, Kanagawa-ken 259-1192 (JP); Matumoto, Kazuhirom c/o Ichikoh Industries, Ltd., Isehara-shi, Kanagawa-ken 259-1192 (JP)
(74) Representative: Grünecker, Kinkeldey, Stockmair & Schwanhäusser Anwaltssozietät

(56) References cited:
- EP-A- 1 077 345
- EP-A- 1 106 907
- JP-A- 8 183 385

## Description

### FIELD OF THE INVENTION

The present invention relates to a head lamp for a vehicle, more particularly to a head lamp for a vehicle which can increase visibility at a time of cornering.

### BACKGROUND OF THE INVENTION

In case of the vehicles, a head lamp, a fog lamp or the like are collectively called as head lamps. These head lamps are known to have a structure in which a movable reflector rotates in a direction in which the steering wheel is rotated and thus focus the light is a direction in which the vehicle turns. This arrangement makes it possible to increase the visibility at the time of cornering (see JP 8 183 385 and US 5 711 590 from which a headlamp according to the preamble of claim 1 is known).

The movable reflector is provided above an optical axis of a fixed reflector. The movable reflector can rotate rightward and leftward around a rotary axis. This rotary axis extends vertically and passes through a center of a light source. Accordingly, a light distribution pattern output from the movable reflector moves in parallel in a direction of rotating the movable reflector.

However, in the prior art, since the rotary axis of the movable reflector is the vertical axis which coincides with the center of a light source, the light distribution pattern applied by the movable reflector only moves in parallel in the rotating direction, and the distance from the vehicle irradiated by the movable reflector is not changed so much. Accordingly, it is impossible to illuminate for a long distance in the direction that is the target of turning by the movable reflector rotating in the direction of steering the handle, so that there is required to further increase visibility at a time of cornering.

Also, EP 1 106 907 discloses a vehicular headlamp wherein an upper reflector can be rotated relative to an intermediate reflector, thereby changing a dispersed light distribution pattern to improve the visibility when the vehicle negotiates the curve.

### SUMMARY OF THE INVENTION

It is an object of the present invention to provide a head lamp for a vehicle which can illuminate a longer distance in the direction that is the target of turning and thus increase visibility at the time of cornering.

The head lamp according to the present invention comprises a fixed reflector that is fixed, the fixed reflector having an optical axis, a light source mounted on the fixed reflector, the light source having a center, and a movable reflector, which freely rotates in a leftward and rightward direction around a rotary axis which extends along an upward and downward direction, formed in an upper side of the optical axis of the fixed reflector. The rotary axis of the movable reflector is backward offset from the center of the light source and the amount of offset of the rotary axis with respect to the center of said light source is 6 to 12 mm.

Since the rotary axis of the movable reflector is backward offset from the center of the light source, the light distribution pattern applied by the movable reflector is formed so that a rotating end section moves upward while moving in the rotating direction, by rotating the movable reflector rightward and leftward. Accordingly, at a time of cornering, it is possible to illuminate brightly the direction that is the target of turning to a section close to a horizontal line, whereby visibility is improved. A backward offset amount of the rotary axis in the reflector selects an optimum value that does not generate a dazzling to cars that come from the opposite direction, in correspondence to the structure of the head lamp.

Other objects and features of this invention will become apparent from the following description with reference to the accompanying drawings.

### BRIEF DESCRIPTION OF THE DRAWINGS

Fig. 1 is a cross sectional view which shows a structure of a head lamp,
Fig. 2 is a front elevational view which shows a fixed reflector and a movable reflector shown in Fig. 1,
Fig. 3 is a view independently which shows light distribution patterns in respective sections of the movable reflector,
Fig. 4 is a view which shows the light distribution patterns in the respective sections of the movable reflector in an overlapping manner,
Fig. 5 is a view which shows a state when the light distribution pattern moves upward by rightward rotating the movable reflector shown in Fig. 2,
Fig. 6 is a plan view which shows a light distribution pattern at a time of rightward cornering in a state when a backward offset amount in Fig. 1 is 5.5 mm and a backward tilting angle is 0,
Fig. 7 is a front elevational view which shows a light distribution pattern at a time of rightward cornering in a state when the backward offset amount in Fig. 1 is 5.5 mm and the backward tilting angle is 0,
Fig. 8 is a plan view which shows a light distribution pattern at a time of rightward cornering in a state when the backward offset amount in Fig. 1 is 9 mm and the backward tilting angle is 3 degrees,
Fig. 9 is a front elevational view which shows a light distribution pattern at a time of rightward cornering in a state when the backward offset amount in Fig. 1 is 9 mm and the backward tilting angle is 3 degrees,
Fig. 10 is a plan view which shows a light distribution pattern at a time of rightward cornering in a state when the backward offset amount in Fig. 1 is 12 mm and the backward tilting angle is 5 degrees,
Fig. 11 is a front elevational view which shows a light distribution pattern at a time of rightward cornering in a state when the backward offset amount in Fig. 1 is 12 mm and the backward tilting angle is 5 degrees,
Fig. 12 is a plan view which shows a light distribution pattern at a time of leftward cornering in a state when the backward offset amount in Fig. 1 is 5.5 mm and the backward tilting angle is 0,
Fig. 13 is a front elevational view which shows a light distribution pattern at a time of leftward cornering in a state when the backward offset amount in Fig. 1 is 5.5 mm and the backward tilting angle is 0,
Fig. 14 is a view which shows light distribution patterns of respective segments in the movable reflector in a state when the movable reflector shown in Fig. 2 is not rotated,
Fig. 15 is a view which shows light distribution patterns of the respective segments in the movable reflector in a state when the movable reflector shown in Fig. 2 is rotated slightly rightward, and
Fig. 16 is a view which shows light distribution patterns of the respective segments in the movable reflector in a state when the movable reflector shown in Fig. 2 is rotated further rightward.

### DETAILED DESCRIPTIONS

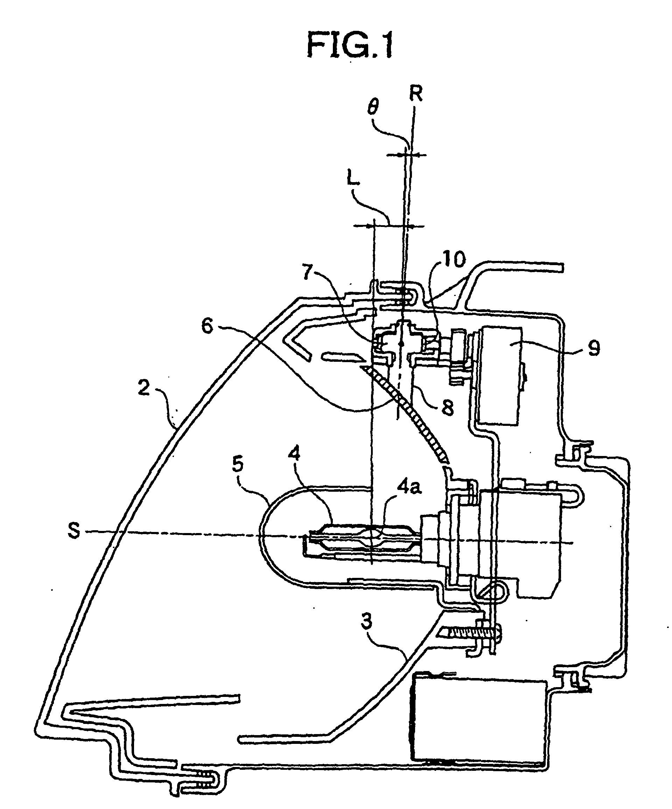

Embodiment of the head lamp according to the present invention will be explained below with reference to Figs. 1 to 16.

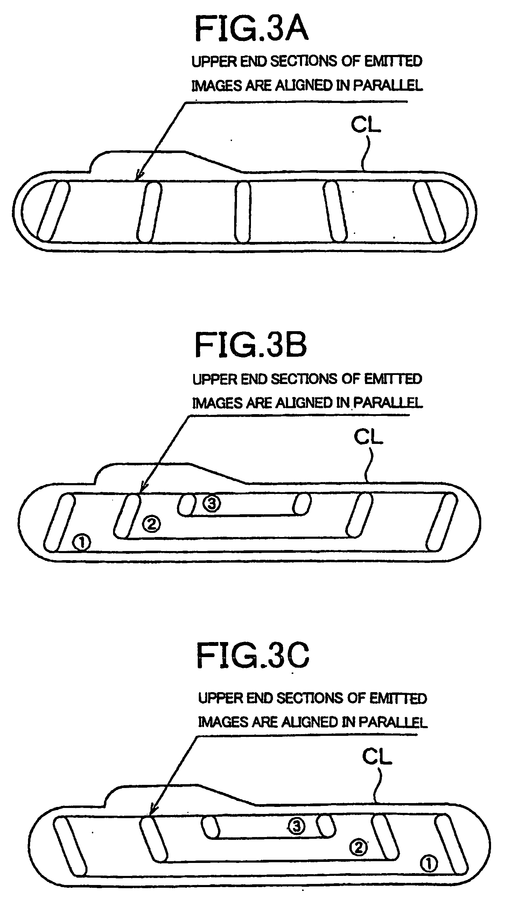

As shown in Fig. 1, an outer lens 2 is provided on a front surface of a housing 1. A fixed reflector 3 is provided in an inner section of the housing 1, and a light source 4 is mounted to a center thereof. The light source 4 is structured such that in order to obtain a predetermined cut line CL (mainly constituted by a lower horizontal cut line, an oblique cut line and an upper horizontal cut line, as shown in Fig. 3) and shield a straight forward moving light which form a glare light, the other sections than an upper section thereof is covered by a shade 5.

An upper side from an optical axis S of the fixed reflector 3 is separately formed as a movable reflector 6 which freely moves in a leftward and rightward direction around 1 rotary axis R which exists on a vertical plane which passes through the optical axis S. A shaft 8 in which a gear 7 is formed is mounted to an upper section of the movable reflector 6, and a worm gear 10 rotated by a stepping motor 9 is engaged with the gear 7. Accordingly, an axis center of the shaft 8 corresponds to the rotary axis R, and the structure is made such as to rotate the movable reflector 6 leftward and rightward around the rotary axis R at an angle of 30 degrees, respectively (totally 60 degrees).

The movable reflector 6 can be rotated in a direction in which the steering wheel is rotated ("steering direction of a handle") in correspondence to a steering angle, and the movable reflector 6 can be rotated at a required angle immediately before operating the handle, by detecting a direction of steering the handle on the basis of information such as a peripheral environment of a vehicle, map information, a vehicle speed or the like.

The rotary axis R of the movable reflector 6 is backward offset from a center 4a of the light source 4 at a predetermined interval L, and is backward tilted at a predetermined angle θ with respect to a vertical axis. The backward offset amount L of the rotary axis R is about 12 mm at the maximum in when a head lamp is of a general structure, and is preferably 6 to 12 mm. Further, the backward tilting angle θ of the rotary axis R is about 5 degrees at the maximum.

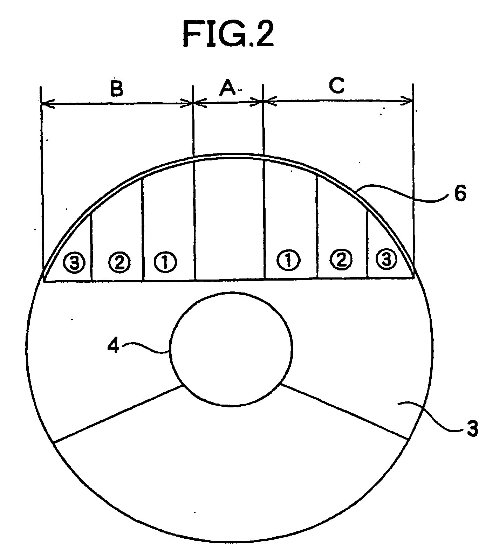

The fixed reflector 3 is structured such as to mainly form a concentrated light distribution pattern which irradiates the light of the light source 4 in a straight moving direction, that is, a concentrated light distribution pattern which concentrically irradiates an upper end section of the light distribution pattern including a cut line CL. Further, the movable reflector 6 is structured such as to mainly form a spread light distribution pattern which irradiates the light at a wide angle. The movable reflector 6 is a free curved surface including a center spreading section A and both side sections B and C thereof, as shown in Fig. 2, and the center spreading section A and both side sections B and C are respectively formed by a plurality of segments.

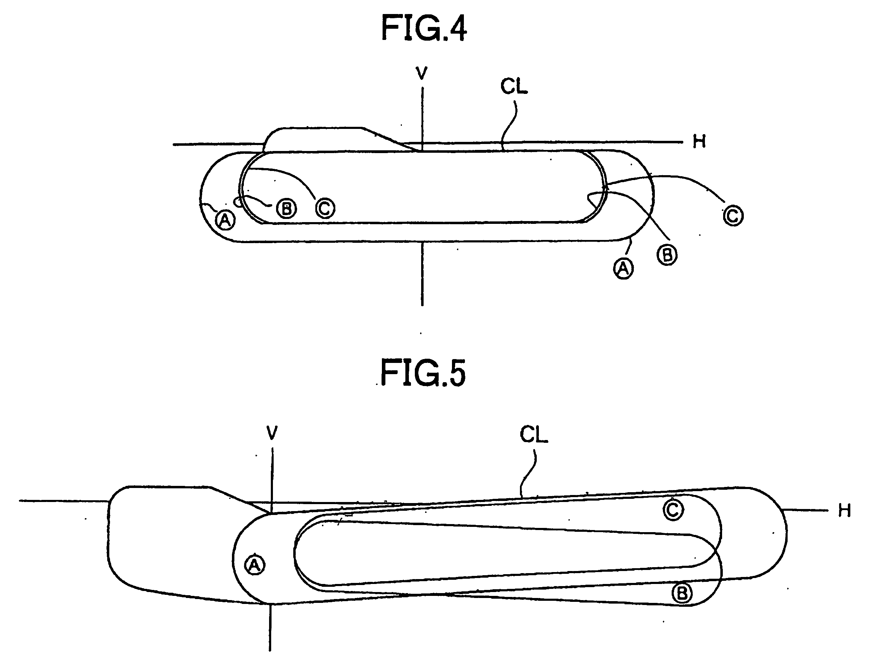

As shown in Figs. 3 and 4, the cut line CL of the light distribution pattern reflected by a reflection surface of the movable reflector 6 at a time of not rotating, that is, at a time when an angle of rotation is 0 degree, is in parallel to a horizontal line H. The cut line CL is formed at a terminal end of the shade 5, and in order to prevent a dazzling against cars that come from the opposite direction, it is set in a lower side from the horizontal line H. A part of a left side of the cut line CL exists above the horizontal line H, because of being formed so as to descend one side end of the shade 5 at about 15 degrees, for the purpose of illuminating a roadside brightly. Here, Fig. 3 is a conceptional explanatory view of the light distribution patterns, which schematically shows filament images of the light source 4 in the respective sections A, B and C of the movable reflector 6 and irradiation ranges. Further, Fig. 4 is an idiomatic schematic view of the light distribution pattern, which schematically shows a state in which the light distribution patterns in the respective sections A, B and C of the movable reflector 6 are overlapped.

Fig. 5 shows the light distribution pattern when the movable reflector 6 is rotated rightward. Since the rotary axis R of the movable reflector 6 is backward offset from the center 4a of the light source 4, when the movable reflector 6 is rotated, for example, rightward, the light distribution pattern applied by the movable reflector 6 moves upward at a right end while moving to the right side of the rotation. Accordingly, at a time of cornering, it is possible to illuminate the turning forward (the right side) brightly to a longer distance. In particular, since the light distribution pattern applied by the movable reflector 6 is a laterally expanding spread light distribution pattern, an effect that the end section moves upward is increased. Here, Fig. 5 is a conceptional explanatory view of the light distribution pattern which schematically shows a state in which the light distribution pattern moves upward by rotating the movable reflector 6 rightward.

However, as shown in Fig. 5, in some backward offset amount L, when there is excessive rotation, there is a possibility in which a part (a right end) of the distribution pattern goes over the horizontal line H to an upper side, therefore in this embodiment, an adjustment is executed so that a whole goes below the horizontal line H by backward tilting the rotary axis R so as to descend the whole of the light distribution pattern. That is, with the head lamp of the general structure, it is possible to avoid the dazzling against the cars that come from the opposite direction by setting the backward offset to 6 to 12 mm so as to descend the light distribution pattern below the horizontal line H. However, when the head lamp is such that it goes over the horizontal line H, the rotary axis R is backward tilted.

Since the cut line CL of the light distribution pattern in the movable reflector 6 is substantially in parallel to the horizontal line H, it is easy to execute an adjustment to move upward so as to move close to the horizontal line H as much as possible while maintaining the light distribution pattern below the horizontal line H.

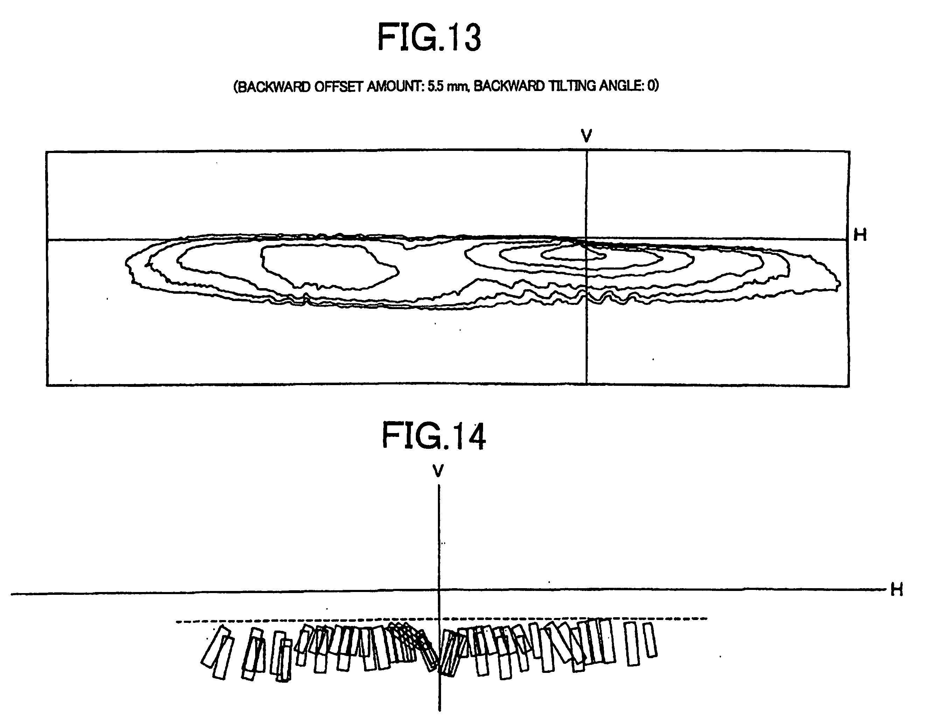

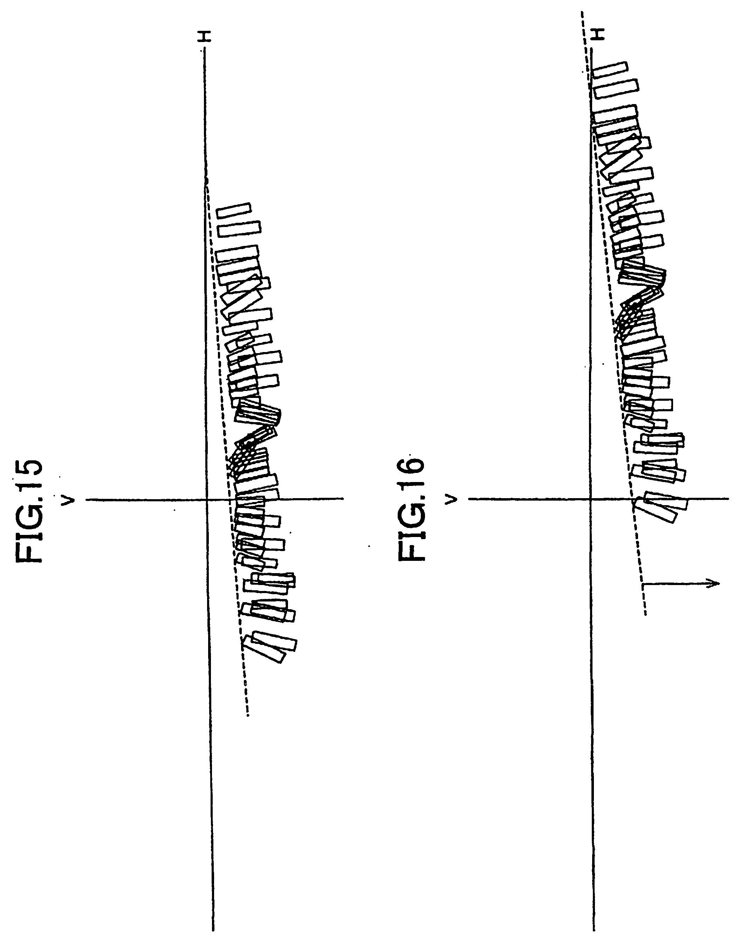

Figs. 14 to 16 show emitted images of the respective segments of the movable reflector 6 in more detail, in which Fig. 14 shows a state in which the movable reflector 6 is directed to a front surface, Fig. 15 shows a state in which it is directed slightly rightward and Fig. 16 shows a state in which it is directed further rightward. It can be seen that the light distribution pattern gradually moves upward in the right direction. When the movable reflector 6 seems to move upward above the horizontal line H while the movable reflector 6 is rotated, that is, when it seems to move further upward to the upper side from the state shown in Fig. 16, a whole of the light distribution pattern is descended by backward tilting the rotary axis R as mentioned above . Here, Figs. 14 to 16 are illustrated in an omitted manner so as to clarify a tendency of the light distribution pattern. Further, Figs. 14 to 16 are explanatory views which show the light distribution pattern obtained in accordance with a simulation of a computer.

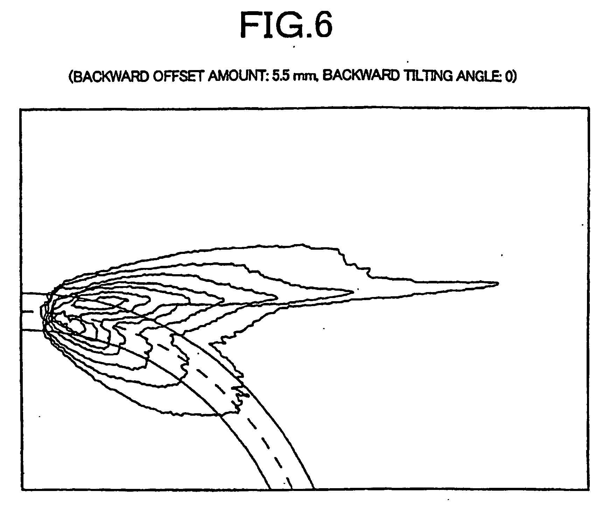

Next, on the basis of Figs. 6 to 13, a light distribution pattern at a time of actual cornering will be shown by a pair of plan view and front elevational view. Figs. 6 to 13 are views of iso-illuminance curves, which show the light distribution pattern.

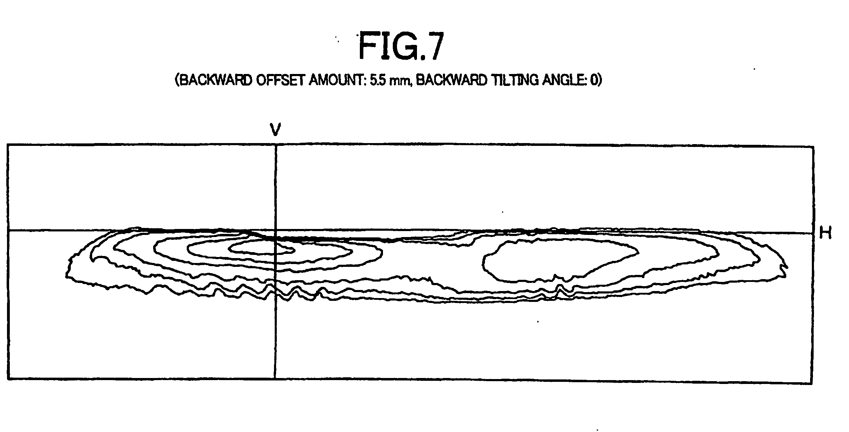

Figs. 6 and 7 show a light distribution pattern at a time of rightward cornering when the backward offset amount L of the movable reflector 6 is 5.5 mm and the backward tilting angle θ is 0. In addition to the light distribution pattern to a front surface, a light distribution pattern to a right side is secured. Further, it is sufficiently close to the horizontal line H while maintaining the state of not going over the horizontal line H, so that it is possible to illuminate the turning direction to the long distance without dazzling the cars that come from the opposite direction.

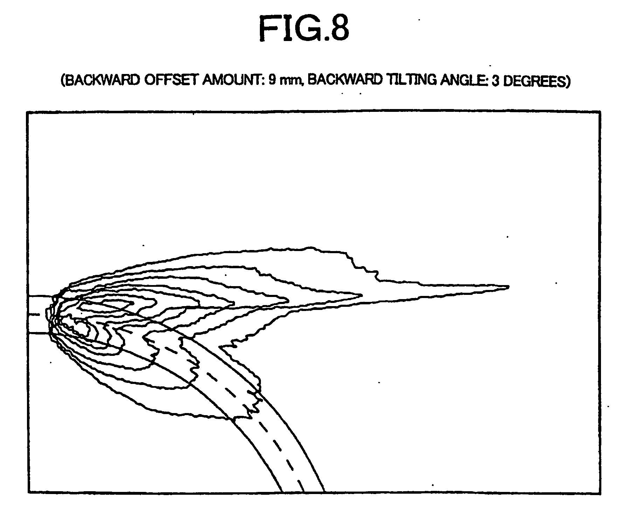

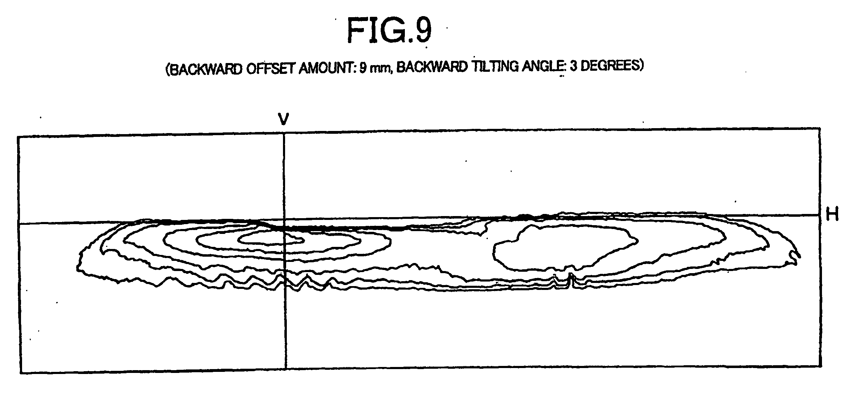

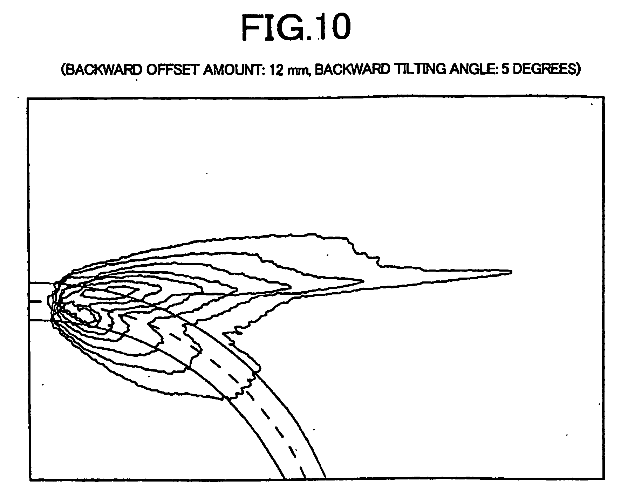

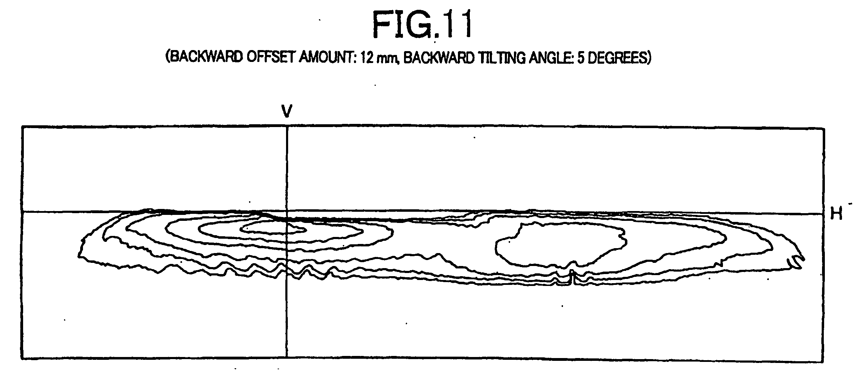

Figs. 8 and 9 show the instance when the backward offset amount L of the movable reflector 6 is 9 mm and the backward tilting angle θ is 3 degrees, and Figs 10 and 11 show the instance when the backward offset amount L of the movable reflector 6 is 12 mm and the backward tilting angle θ is 5 degrees, respectively. In both instances, it is sufficiently close to the horizontal line H while maintaining the state of not going over the horizontal line H, so that it is possible to illuminate the turning direction to the long distance without dazzling the cars that come from the opposite direction.

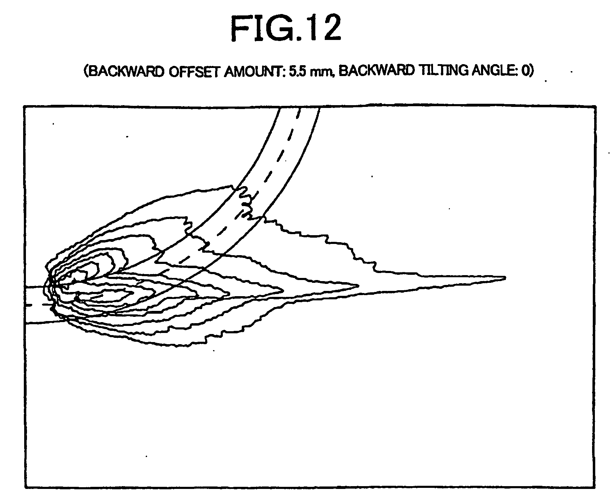

Figs. 12 and 13 show the light distribution pattern at a time of leftward cornering under the same conditions as those in Figs. 6 and 7. When cornering leftward, in the same manner as that of the rightward cornering, it is sufficiently close to the horizontal line H while maintaining the state of not going over the horizontal line H, so that it is possible to illuminate the turning direction to the long distance without dazzling the cars that come from the opposite direction.

According to the present invention, since the rotary axis of the movable reflector is backward offset from the center of the light source, when rotating the movable reflector rightward and leftward, the light distribution pattern applied by the movable reflector moves upward at the rotating end section while moving in the rotating direction. Accordingly, at a time of cornering, it is possible to brightly illuminate the direction that is the target of turning to the section close to the horizontal line, so that visibility is improved. Here, the backward offset amount of the rotary axis in the reflector selects an optimum value which does not apply the dazzling to the cars that come from the opposite direction, in correspondence to the structure of the head lamp.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A head lamp for a vehicle, said head lamp comprising:
a fixed reflector (3) that is fixed, said fixed reflector (3) having an optical axis (5);
a light source (4) mounted on said fixed reflector (3), said light source (4) having a center; and
a movable reflector (6), which freely rotates in a leftward and rightward direction around a rotary axis (R) which extends along an upward and downward direction, formed in an upper side of the optical axis (5) of said fixed reflector (3),
**characterized in that**
the rotary axis (R) of said movable reflector (6) is backward offset from the center (4a) of said light source (4), and
the amount (L) of offset of the rotary axis (R) with respect to the center (4a) of said light source (4) is 6 to 12 mm.

2. The head lamp according to claim 1, wherein the rotary axis (R) is backward tilted with respect to a vertical axis.

3. The head lamp according to claims 1 or 2, wherein said movable reflector (6) includes at least a spreading section provided above the optical axis (5) of said fixed reflector (3).

4. The head lamp according to claim 1, wherein a reflection surface of said movable reflector (6) is a free curved surface in which a cut line (CL) which corresponds to an upper end section of a light distribution pattern is substantially in parallel to a horizontal line (H) at a time when the angle of rotation of said movable reflector is 0 degree.

## Patentansprüche

1. Scheinwerfer für ein Fahrzeug, wobei der Scheinwerfer umfasst:
einen fixierten Reflektor (3), der fest ist, wobei der fixierte Reflektor (3) eine optische Achse (5) aufweist;
eine Lichtquelle (4), die auf den fixierten Reflektor (3) montiert ist, wobei die Lichtquelle (4) ein Zentrum hat; und
einen beweglichen Reflektor (6), der frei um eine Drehachse (3), sich nach oben und unten erstreckt, nach links und rechts frei drehen kann, der auf einer oberen Seite der optischen Achse (5) das fixierte (??) Reflektor (3) ausgebildet ist,
**dadurch gekennzeichnet, dass**
die Drehachse (R) des beweglichen Reflektors (6) ausgehend vom Zentrum (4a) der Lichtquelle (4) nach hinten verschoben ist und
die Verschiebung (L) der Drehachse (R) bezüglich dem Zentrum (4a) der Lichtquelle (4) gleich 6 bis 12 mm ist.

2. Scheinwerfer nach Anspruch 1, wobei die Drehachse (R) bezüglich einer vertikalen Achse nach hinten gekippt ist.

3. Scheinwerfer nach Anspruch 1 oder 2, wobei der bewegliche Reflektor (6) mindestens einen Verteilabschnitt, der oberhalb der optischen Achse (5) des fixierten Reflektors (3) bereitgestellt wird, beinhaltet.

4. Der Scheinwerfer nach Anspruch 1, wobei eine reflektierende Oberfläche des beweglichen Reflektors (6) eine freie gekrümmte Oberfläche ist, bei der eine Schnittlinie (CL), die einem oberen Endabschnitt eines Lichtverteilungsmusters entspricht, im Wesentlichen parallel zu einer horizontalen Linie (H) zum Zeitpunkt ist, wenn der Drehwinkel des beweglichen Reflektors gleich 0° ist.

## Revendications

1. Phare pour un véhicule, ledit phare comprenant :
un réflecteur fixe (3) qui est fixé, ledit réflecteur fixe (3) comportant un axe optique (5) ;
une source de lumière (4) montée sur ledit réflecteur fixe (3), ladite source de lumière (4) comportant un centre ; et
un réflecteur mobile (6) tournant librement vers la gauche et vers la droite sur un axe de rotation (R) qui s'étend vers le haut et vers le bas, et formé dans un côté supérieur de l'axe optique (5) dudit réflecteur fixe (3),
**caractérisé en ce que**
l'axe de rotation (R) dudit réflecteur mobile (6) est décalé vers l'arrière par rapport au centre (4a) de ladite source de lumière (4), et
la grandeur (L) du décalage de l'axe de rotation (R) par rapport au centre (4a) de ladite source de lumière (4) est de 6 à 12 mm.

2. Phare selon la revendication 1, dans lequel l'axe de rotation (R) est incliné vers l'arrière par rapport à un axe vertical.

3. Phare selon la revendication 1 ou 2, dans lequel ledit réflecteur mobile (6) comprend au moins une partie de diffusion située au-dessus de l'axe optique (5) dudit réflecteur fixe (3).

4. Phare selon la revendication 1, dans lequel une surface de réflexion dudit réflecteur mobile (6) est une surface courbe libre dans laquelle une ligne de coupe (CL) qui correspond à une partie d'extrémité supérieure d'un motif de répartition de lumière, est sensiblement parallèle à une ligne horizontale (H) au moment où l'angle de rotation dudit réflecteur mobile est de 0 degré.
